# EUROPÄISCHE PATENTSCHRIFT

(11) **EP 0 349 490 B1**
(45) Veröffentlichungstag und Bekanntmachung des Hinweises auf die Patenterteilung: **21.04.1993**
(21) Anmeldenummer: 89810487.2
(22) Anmeldetag: 27.06.1989
(51) Int. Cl.: B07B 4/02, B24C 9/00, B23K 9/32, B07B 11/06

(54) **Verfahren und Vorrichtung zur Aufbereitung von Granulaten**
Method and device for preparing granulates
Procédé et dispositif de préparation de granulés

(30) Priorität: 01.07.1988 CH 2515/88
(43) Veröffentlichungstag der Anmeldung: 03.01.1990
(73) Patentinhaber: ASPA ZÜRICH AG, CH-8048 Zürich (CH)
(72) Erfinder: Geisseler, Max, CH-8356 Ettenhausen (CH)
(74) Vertreter: White, William

(56) Entgegenhaltungen:
- EP-A- 0 005 604
- DE-A- 2 043 116
- DE-A- 3 005 954
- FR-A- 2 353 338
- GB-A- 1 536 807
- US-A- 2 221 385
- US-A- 2 968 400
- US-A- 4 239 804
- US-A- 4 433 511

## Beschreibung

Die Erfindung betrifft ein Verfahren zum Aufbereiten von Granulat an einer Arbeitsstelle mittels einer Aufbereitungsvorrichtung, wobei man eine variierbare Menge von Umgebungsluft als Trägerluft zum Fördern des aufzubereitenden granulats durch die Aufbereitungsvorrichtung saugt.

Bei Prozessen, zu deren Durchführung körnige Arbeitsmittel, das heisst Granulate oder Granulatgemische, verwendet werden, ist es üblich, diese in einem Kreislauf zu führen, unterwegs von dazugekommenen Verunreinigungen zu befreien und es wäre erwünscht, verbrauchte Granulate durch frische zu ersetzen, ohne den betrieb zu unterbrechen.

Als Beispiel sei der betrieb von allgemein bekannten Schleuderrad-Putzstrahlmaschinen erwähnt, bei welchen bisher übliche Granulat-Wiederaufbereitungsanlagen zum Einsatz kommen. Das drei als Arbeitmittel verwendete granulöse Putzstrahlmittel gelangt nach dem Öffnen einer Schwenkklappe aus einem Zwischenbehälter im freien Fall zum Schleuderrad und wird nach Verrichtung seiner Arbeit von einem unten liegenden Auffangtrichter zusammen mit den gebildeten Verunreinigungen zu einem Granulatreiniger hochgehoben, z.B. mit einem Becherwerk, und dort gereinigt. Von den üblicherweise zwei Ventilatoren dient einer, der meist auf dem Granulat-Reiniger angeordnet ist, zur Entstaubung des Granulats und ein zweiter, der meist auf dem Staubfilter angordent ist, zur Entstaubung der Strahlkammer. bei derartigen Putzstrahlmaschinen, die bei jedem Werkstück-und/oder Chargenwechsel abgestellt und geöffent werden, wird frisches Granulat als Ersatz für verbrauchtes Granulat je nach bedarf sackweise in die Strahlkammer zugegeben, während die Maschine stillsteht.

UP-Schweissmaschinen sind eine andere Art von allgemein bekannten Einrichtungen mit umlaufenden granulösen Arbeitsmitteln. Einfachere Versionen sind üblicherweise nur mit einem Granulat-bzw. Pulverbehälter und einem Absauggerät ausgerüstet. Mit einer eingefüllten Granulatcharge wird einige Zeit gearbeitet, dann der Schweissprozess unterbrochen und frisches Granulat manuell nachgefüllt. Solche Maschinen vermögen den Betriebsanforderungen neuzeitlicher Schweissanlagen nicht zu genügen, zudem erbringen sie stark schwankende Schweisspulverzusammensetzungen.

Kompliziertere Schweissanlagen mit Frischgranulat- bzw. Frischpulverversorgung werden bisher üblicherweise wie folgt ausgeführt: das umlaufende Schweisspulver wird mittels eines Sauggebläses vom Schweisskopf zu einem Fliehkraftabscheider hochgesaugt, darin von mitgeführten Verunreinigungen befreit und das wieder verwendbare Pulver über taktweise arbeitende Schleusen in einen Drucktank eingebracht. Hier wird nach Massgabe des Verbrauches auch frisches Pulver beigefügt und dann das aufbereitete Pulver mittels taktweise arbeitenden Schleusen ausgeschieden und mit separater Druckluft-Schubförder-Einrichtung zum Schweisskopf gebracht. Neben den aufwendigen Mehrkammer-Ein- und Ausschleuse-Einrichtungen für das Granulat, das heisst das Schweisspulver, sind zur Verhinderung von Pulverzusammenbackungen in der Schubförderleitung auch teure Einrichtungen für die Trocknung der Förderluft erforderlich. Ferner wird hier ebenfalls der pulververschleiss-fördernde und bezüglich der abzuscheidenden Grenzkorngrösse nicht regelbare Fliehkraftabscheider verwendet. Zudem hat die verwendete Schubförderung den Nachteil, dass die beim Schweisskopf austretende Förderluft beständig Pulverstaub - wenn auch nur in kleinen Mengen - in die Umgebung bläst.

Bei einem anderen Aufbereitungssystem für Schweisspulver benutzt man zur Verhinderung des letztgenannten Nachteils wohl eine Saugzugförderung, benötigt aber für die Zuführung des als Arbeitsmittel dienenden Schweisspulvers zum Schweisskopf einen das Arbeitsmittel verschleissenden Fliehkraftabscheider und dazu eine taktweise arbeitende Ein- und Ausschleuse-Vorrichtung. Diese Ausführung hat den weiteren Nachteil, dass die mit dem Arbeitsmittel von der Schweissstelle abgesaugten und verschleissfördernden Verunreinigungen noch den grössten Teil des Kreislaufes durchströmen müssen, bevor sie durch einen zweiten Fliehkraftabscheider aus dem Kreislauf entfernt werden.

Die gattungsbildende EP 0 005 604 beschreibt z.B. eine Vorrichtung zur Granulataufbereitung. Der Rückführkanal ist mit einer beweglichen Wand zur Veränderung des Querschnittes versehen, so dass dieser entweder gleichbleibend oder sich von unten nach oben verjüngend ist. Der Guttransport erfolgt daher entweder mit gleichbleibender oder sich von unten nach oben vergrössernden Geschwindigkeit. Die Absaugung der Trägerluft erfolgt vollständig bevor der Granulatstrom infolge seiner Massenträgheit bewegt, zu einem Gutschleier umgeformt worden ist. Im freien Fall wird dann das Granulat durch einen Frischluftstrom durchquert. Dieser Frischluftstrom wird durch die Absaugmittel für die Trägerluft erzeugt und ebenfalls abgesaugt und gefiltert. Nachteilig ist dabei, dass zwei Luftströme gebildet und zusammen zu filtern sind daneben besteht der Mangel, dass während des Betriebes kein Ersatzgranulat nachgespeist werden kann.

Auch bei der Einrichtung gemäss US 2 968 400 ist kein Diffusor zur Erzeugung eines Gutschleiers mit abnehmender Geschwindigkeit vorgesehen, und auch hier ist keine Nachspeisung von Ersatzgranulat vorgesehen. Die Abscheidung erfolgt durch Zyklorwirkung mit den erwähnten Nachteilen.

Bei der Einrichtung gemäss GB 1 536 807 verringert sich die Querschnittsfläche des Absaugkanals von unten nach oben, so dass die Granulatgeschwindigkeit sich entsprechend erhöht. Der Gutstrom wird somit nicht zu einem langsamen, fliessenden Schleier verwandelt, so dass die Reinigungswirkung klein ist. Ausserdem ist ein zusätzliches Gebläse vorgesehen, was die Anlage kompliziert.

Die Einrichtung gemäss FR 2 353 338 weist keine pneumatische Granulatförderung auf und es wird aus dem Granulat-Strom kein Schleier erzeugt. Eine Nachspeisung von Granulat ist nicht vorgesehen.

Die DE 2 043 116 schliesslich beschreibt eine Anlage mit zwei Förderkreisläufen, nämlich mit Druckluft für den Granulatstrom und mit Saugluft für die Entstaubung des Granulates. Auch hier wird der Granulatstrom nicht in einen Schleier überführt, wie es zur effizienten Reinigung vorteilhaft ist.

Die Aufgabe der Erfindung wird somit darin gesehen, ein verbessertes und möglichst einfaches Verfahren eingangs genannter Art sowie eine Vorrichtung zur Durchführung derselben aufzuzeigen.

Diese Aufgabe wird erfindungsgemäss dadurch gelöst, dass man einen variierbaren Teil dieser Trägerluft zum Ausscheiden von mit dem Granulat strömenden granulatfremden Teilen verwendet, wobei das aufzubereitende Granulat als Gutstrom in einer Leitung mit einem ersten Querschnitt mittel der Trägerluft gefördert wird, dann am Ende dieser Leitung allmählich in einen Gutstrom mit einem zweiten, breiteren und dünneren, sowie gegenüber dem ersten grösseren Querschnitt umgelenkt wird und anschliessend auf einer schrägen Fläche ebenfalls allmählich in einen Gutstrom mit einem dritten, nochmals breiteren Querschnitt umgelenkt wird und mit einer dünnen, weitgehend abgebremsten Schicht zu einer Staustelle gelangt, deren Stauvolumen variierbar ist, dass man den Gutstrom anschliessend als Schleier herabrieseln lässt und diesen Schleier mittels des genannten Teils der Trägerluft quer durchströmt, dass man unter Veränderung der Schleierdicke und der Menge des genannten Teils der Trägerluft die auszuscheidende Granulat-Grenzkorngrösse variiert, und dass man unter Vergrösserung der Menge der Trägerluft weiteres Granulat zuführt, wenn das Granulat ein variierbares Minimum unterschreitet, und dass die ganze Förderung im Unterdruck erfolgt.

Das als Arbeitsmittel dienende Granulat strömt mit der Trägerluft mit hoher Geschwindigkeit durch die Einrichtung. Die Steigleitung ist im allgemeinen zylindrisch und geht an ihrem oberen Ende über in einen Rohrbogen, in welchem der querschnitt des Gutstroms in horizontaler Richtung allmählich 4 - 6 mal breiter wird als der Durchmesser der Steigleitung und sich quer dazu ebenfalls allmählich auf 1/3 - 1/2 dieses Durchmessers verkleinert, so dass sich die Querschnittsfläche ca. 1,5 - 4 mal vergrössert. Auf der anschliessenden Verteilrutsche verbreitert sich der Gutstrom nochmals allmählich auf das 7 - 9-fache des Durchmessers der Steigleitung und gelangt als dünne und stark abgebremste Schicht zu einer Staustelle, deren Stauvolumen mit Vorteil einstellbar ist, beispielsweise dadurch, dass die Neigung der Stauwand verändert werden kann. Von der Staustelle rieselt das Granulat vor einem Schrägkanal, über den die Reinigungsluft abgesogen wird, im freien Fall in einen Zwischenbehälter.

Die auszuscheidende Arbeitsmittel-Grenzkörnergrösse lässt sich vorteilhaft den Betriebserfordernissen anpassen, da sowohl die Reinigungsluftmenge als auch die Dicke des Granulatschleiers durch verstellen der Stauwand einstellbar ist.

Vorteilhaft wird ein den Austrag hemmender Unterdruck im unteren Teil der Arbeitsmittel-Zufuhrleitung durch eine zu einem Zwischenbehälter führende Druckausgleichsleitung behoben.

Für den störungsfreien Ablauf des Prozesses ist es günstig, wenn im Arbeitsmittel-Vorratsbehälter mit einer Zwischenwand eine Absaugkammer mit konstant bleibendem Arbeitsmittel-Schüttkegel gebildet wird und das untere Ende der Frischarbeitsmittel-Förderleitung um eine Strecke in diesen Schüttkegel eintaucht, die etwa dem Druchmesser der Leitung entspricht.

Durch das neue Verfahren herrscht in der gesamten Aufbereitungsanlage Unterdurck, so dass kein Staub in die Umgebung austritt. Für die Zugabe und Entnahme des Arbeitsmittels müssen keine besonderen Ein- und Ausschleuse-Mechanismen vorgesehen werden.

Bevorzugte Ausführungsbeispiele der erfindungsgemässen Vorrichtung werden im folgenden anhand der Zeichnung ausführlich beschrieben. Es zeigt:
- Fig. 1: eine erste als Putzstrahlmaschine ausgebildete Vorrichtung nach der Erfindung, im Schnitt von der Seite gesehen, in vereinfachter Darstellung, und
- Fig. 2: eine zweite als Pulverschweissmaschine ausgebildete Vorrichtung nach der Erfindung, im Schnitt von der Seite gesehen, in vereinfachter Darstellung.

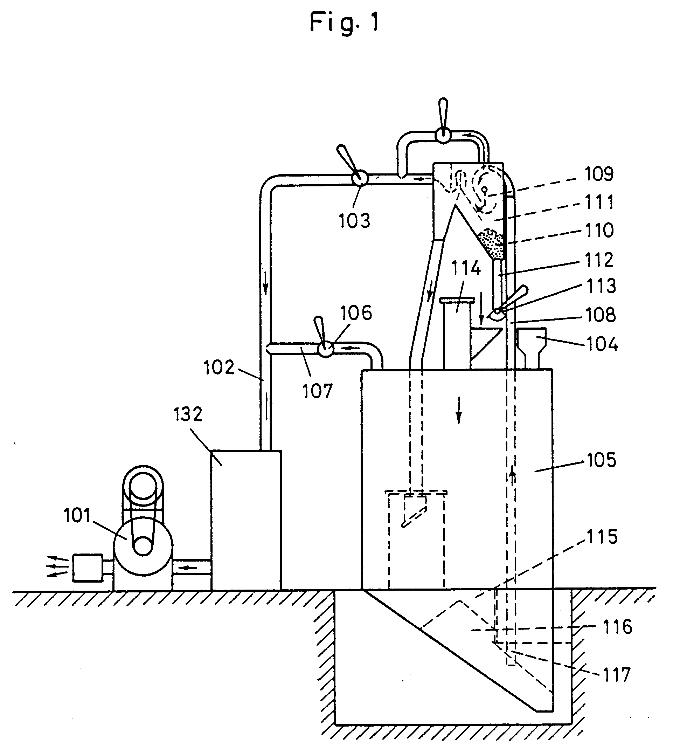

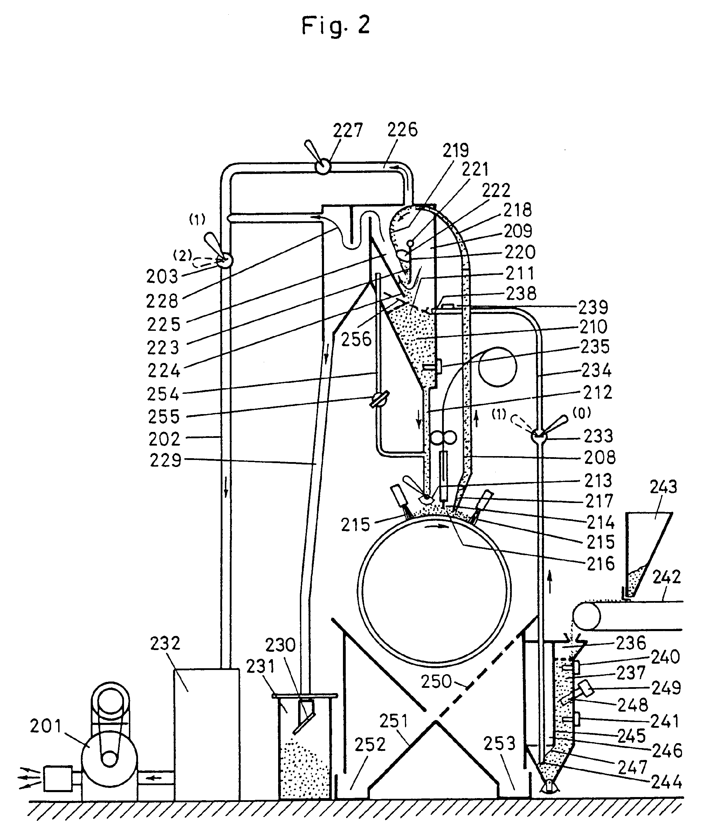

Bei der Putzstrahlmaschine gemäss Fig. 1 wird durch ein Sauggebläse 101 und eine Saugleitung 102 mit einem Drosselventil 103 Umgebungsluft über einen Ansaugstutzen 104 in eine Arbeitskammer 105 und dann dort teilweise unmittelbar über eine mit einer Drosselklappe 106 versehene Entstaubungsleitung 107 und teilweise über eine Umlaufförderleitung 108 und einen Granulatreiniger 109 zum Feinstaubabscheider 132 gefördert. Das aufbereitete Arbeitsmittel bzw. Granulat 110 strömt durch einen Zwischenbehälter 111, durch eine Zufuhrleitung 112 und nach dem Oeffnen einer Schwenkklappe 113 zum Arbeitsgerät, das hier als ein Schleuderrad 114 ausgebildet ist, und fällt nach Verrichtung seiner Arbeit in einen Sammeltrichter 115. Das verbrauchte Granulat 116 wird durch das darin eintauchende untere Ende 117 der Umlaufförderleitung 108 zum Granulatreiniger 109 zurückgefördert, dort wie dies für Fig. 2 beschrieben wird, gereinigt und in den Kreislauf zurückgeführt. Ein aus dem Zwischenbehälter 111 herausziehbares Lochblech 156 dient zum Auffangen von allfällig im aufzubereitenden Granulat vorkommenden Grob-Verunreinigungen.

Bei solchen Putzstrahlmaschinen, die bei jedem Werkstück- und/ oder Chargenwechsel ohnehin stillgesetzt und geöffnet werden müssen, kann frisches Arbeitsmittel das heisst Granulat in einfacher Weise bei einem Arbeitsunterbruch in die Strahlkammer geschüttet werden.
Bei kontinuierlich arbeitenden Putzverfahren wie z.B. beim Strahl-Entzundern von Walzdrähten wird jedoch die Zugabe von frischem Granulat mit der Einrichtung gemäss Fig. 2 ausgeführt.

Die UP-Schweissmaschine gemäss Fig. 2 weist eine neue Schweisspulver-Aufbereitungsanlage auf. Weil diese ohne die umhüllende Arbeitskammer auskommt, wird die Umgebungsluft durch ein Sauggebläse 201 und eine Saugleitung 202 mit einem Drosselventil 203 unmittelbar über eine Umlaufförderleitung 208 zu einem Granulatreiniger 209 gesogen. Aufbereitetes Granulat 210 strömt aus einem Zwischenbehälter 211, über eine Zuführleitung 212 und nach dem Oeffnen einer z.B. manuell betätigten Regelklappe 213 dosiert zur Arbeitsstelle, das heisst zu einem Schweisskopf 214 und wird nach Verrichtung seiner Arbeit von einer z.B. mit Drahtbürsten 215 gebildeten Sammelstelle 216 mit einer dort eintauchenden Saugdüse 217 der Umlaufförderleitung zum Granulatreiniger 209 hochgesogen. Das in der Umlaufförderleitung 208 mit hoher Geschwindigkeit strömende Fördergut bestehend aus Trägerluft und Granulat wird am oberen Leitungsende in einem sich allmählich verbreiternden und verdünnenden Rohrbogen 218 in einen annähernd horizontal gerichteten Gutstrom umgewandelt und anschliessend auf einer weiterern, sich ebenfalls allmählich verbreiternden, in eine geneigte Ebene übergehende, Verteilrutsche 219 als dünne, weitgehend abgebremmste Schicht zu einer Stauwand 220 geführt, in gleicher Art wie dies bereits für Fig. 1 beschrieben wurde. Die Stauwand 220 ist um eine Horizontalachse 221, z.B. mit Hilfe eines von aussen bedienbaren Exzenters 222, in der Neigung einstellbar. Von der Staustelle 223 fällt das Granulat als Windsichterschleier 224 im freien Fall in den Zwischenbehälter 211 zurück. Durch die über einen Schrägkanal 225 abziehende und mit einer im Bypass 226 eingebauten Drosselklappe 227 einstellbare Schleier-Luftmenge lässt sich ein unter einem vorgegebenen Grenzkorn liegnder Teil der Verunreinigungen ausblasen. Hiervon wird ein Grobkornanteil in bekannter Weise in einer Absetzkammer 228 durch Verminderung den Luftströmungsgeschwindigkeit über eine Fallleitung 229 und ein Läpperventil 230 aus dem Kreislauf ausgeschieden und z.B. in einem Abfallbehälter 231 aufgefangen. Der mit der Saugluft noch mitgerissene Feinstaub wird in ebenfalls bekannter Weise in einem Feinstaubabscheider 232 aus dem Kreislauf entfernt.

Während des normalen Förder- und Reinigungsvorganges steht das Drosselventil 203 auf einer der Förderluftmenge entsprechenden Stellung (1) und eine Klappe 233 in einer Frischpulver- bzw. Frischgranulat-Förderleitung 234 ist in geschlossener Stellung (0). Wenn im Zwischenbehälter 211 das aufbereitete Granulat, das heisst das Schweisspulver 210, infolge seines stetigen Verbrauches auf sein noch zulässiges Minimalniveau abgesunken ist, wird ohne Unterbrechung des Arbeitsprozesses in an sich bekannter Weise durch einen Niveausensor 235 das Drosselventil 203 auf Stellung (2) für erhöhte Saugluftmenge und gleichzeitig die Klappe 233 auf geöffnete Stellung (1) gebracht und dadurch aus einem Vorratsbehälter 236 solange frisches Granulat, das heisst Schweisspulver 237,zum Zwischenbehälter 211 gefördert, bis dieses beim Förderleitungseintritt 238 das Maximalniveau erreicht hat und z.B. ein Drucksensor 239 das Drosselventil 203 und die Klappe 233 in ihre Ausgangsstellungen zurückversetzt.

Im Vorratsbehälter 236 werden ein Maximalniveausensor 240 und ein Minimalniveausensor 241 in ebenfalls bekannter Weise entweder für das Siganlisieren der jeweiligen Füllzustände und die entsprechenden Nachfüllaktionen oder dann zum automatischen Nachfüllen mittels eines Förderbandes 242 aus einem Vorratssilo 243 eingesetzt. Um unabhängig vom momentanen Frischpulver-niveau bzw. Frischgranulatniveau eine sichere Förderung zu gewährleisten, wird das untere Förderleitungsende 244 zweckmässigerweise in eine durch eine Zwischenwand 245 gebildete Saugkammer 246 mit einem konstanten Schüttkegel 247 eingetaucht.

Wenn, wie im vorliegenden Beispiel, das Zusammenbacken des Schweisspulvers bei Betriebsstillständen vermieden werden soll, lässt sich der Vorratsbehälter mit z.B. einem Elektro-Heizstab 248 und mit einer zugehörigen Temperaturregelung ausrüsten.

Allfällig bei den Bürsten 215 durchfallendes oder mit den Schlacken mitgeführtes Granulat, das heisst Schweisspulver, kann in bekannter Art, z.B. durch Siebe 250 und Rutschen 251, getrennt in Wannen 252, 253 aufgefangen und von dort beispielsweise von Hand in den Vorratsbehälter bzw. zum Abfall befördert werden.

In Fällen, wo relativ grossen Förderhöhen nur eine kleine Säule aufbereitetes Granulat gegenübersteht, ist es zweckmässig, zum Ausgleich des Druckunterschiedes in der Zufuhrleitung 212 eine Druckausgleichsleitung 254 mit Drossel 255 vorzusehen.

In anderen Fällen, wo die Arbeitsstelle und der Granulatreiniger nicht übereinander liegen, kann der Hin- und Hertransport des aufbereitenten bzw. verbrauchten Granulats in bekannter Weise, z.B. mit horizontal fördernden Schüttelrinnen bzw. Pneumatik-Förderleitungen, bewerkstelligt werden.

Allfällig im aufzubereitenden Granulat vorkommende grobe Verunreinigungen lassen sich in bekannter Weise in einem aus dem Zwischenbehälter 211 herausziehbarem Lochblech 256 auffangen und aus dem Granulatkreislauf entfernen.

## Patentansprüche

1. Verfahren zum Aufbereiten von Granulat an einer Arbeitsstelle mittels einer Aufbereitungsvorrichtung, wobei man eine variierbare Menge von Umgebungsluft als Trägerluft zum Fördern des aufzubereiteten Granulats durch die Aufbereitungsvorrichtung saugt, dadurch gekennzeichnet, dass man einen variierbaren Teil dieser Trägerluft zum Ausscheiden von mit dem Granulat strömenden granulatfremden Teilen verwendet, wobei das aufzubereitende Granulat als Gutstrom in einer Leitung (108,208) mit einem ersten Querschnitt mittels der Trägerluft gefördert wird, dann am Ende dieser Leitung allmählich in einen Gutstrom mit einem zweiten, breiteren und dünneren, sowie gegenüber dem ersten grösseren Querschnitt umgelenkt wird und anschliessend auf einer schrägen Fläche (219) ebenfalls allmählich in einen Gutstrom mit einem dritten, nochmals breiteren Querschnitt umgelenkt wird und mit einer dünnen, weitgehend abgebremsten Schicht zu einer Staustelle (223) gelangt, deren Stauvolumen variierbar ist, dass man den Gutstrom anschliessend als Schleier herabrieseln lässt und diesen Schleier mittels des genannten Teils der Trägerluft quer durchströmt, dass man unter Veränderung der Schleierdicke und der Menge des genannten Teils der Trägerluft die auszuscheidende Granulat-Grenzkorngrösse variiert, und dass man unter Vergrösserung der Menge der Trägerluft weiteres Granulat zuführt, wenn das Granulat ein variierbares Minimum unterschreitet, und dass die ganze Förderung im Unterdruck erfolgt.

2. Verfahren nach Patentanspruch 1, dadurch gekennzeichnet, dass der erste Querschnitt (108,208) rund und der zweite Querschnitt (218) horizontal das 4 bis 6 fache und quer dazu 1/2 bis 1/3 des Durchmessers des ersten Querschnittes, und die Breite des dritten Querschnittes (219) das 7 bis 9 fache des Durchmessers des ersten Querschnittes ist.

3. Verfahren nach Patentanspruch 1, dadurch gekennzeichnet, dass das Nachfüllen von frischem Granulat in einen Granulat-Vorratsbehälter (236) und seine Zuführung zur Arbeitsstelle (114,214) ohne Unterbruch des Ausscheidungsvorganges vorgenommen wird.

4. Verfahren nach Patentanspruch 1, dadurch gekennzeichnet, dass das von der Arbeitsstelle nicht abgesaugte Granulat zur Aufbereitung in einen Granulat-Vorratsbehälter (115) geführt wird.

5. Verfahren nach Patentanspruch 1, dadurch gekennzeichnet, dass man die angesaugte Umgebungsluft zuerst zum Entstauben einer vom Granulat durchströmten Arbeitskammer (105) verwendet, bevor man einen variierbaren Teil davon als Trägerluft verwendet.

6. Vorrichtung zur Durchführung des Verfahrens nach Patentanspruch 1, mit einer am Ende eines Saugsystems angeordneten Saugvorrichtung (101,201) für Umgebungsluft als Trägerluft zum Fördern des Granulats, mit einer Einrichtung, um mit einem Teil dieser Trägerluft granulatfremde Teile aus dem Granulat auszuscheiden, durch eine Leitung (108,208) mit einem ersten Querschnitt für einen Gutstrom aus unaufbereitetem Granulat und Trägerluft, welche an ihrem Ende übergeht in einen gebogenen Leitungsteil (218) mit einem zweiten Querschnitt, der länglicher und grösser ist als der erste Querschnitt, mit einer als schräge Fläche ausgebildeten Verteilrutsche (219), mit einer Staustelle (223) für den die Verteilrutsche verlassenden Gutstrom, mit Mitteln (220,226,227), um den genannten Teil der Trägerluft unterhalb der Staustelle (223) quer zum herabrieselnden Gutstrom hindurchzuleiten, mit Mitteln (103,203) um den Gutstromschleier in seiner Dicke und die Menge der durch den Schleier durchströmenden Teil der Trägerluft zu variieren und mit Mitteln (236,238 bis 246), um das an der Arbeitsstelle verbrauchte und ausgeschiedene Granulat ohne Unterbruch des Aufbereitungsverfahrens durch frisches Granulat zu ersetzen.

7. Vorrichtung nach Patentanspruch 6, mit einer Kammer (105), welche eine mittels des Granulats arbeitende Einrichtung umschliesst, in welche Umgebungsluft angesaugt wird, gekennzeichnet durch eine einstellbare Einrichtung (106), um einen Teil dieser Umgebungsluft als Trägerluft zum Abtransport des Granulats aus der Kammer zu verwenden.

8. Vorrichtung nach Patentanspruch 6, dadurch gekennzeichnet, dass eine zu einem Zwischenbehälter (211) führende Druckausgleichsleitung (254) vorgesehen ist, um einen den Austrag hemmenden Unterdruck im unteren Teil einer Zufuhrleitung (212) zu beheben.

9. Vorrichtung nach Patentanspruch 6, dadurch gekennzeichnet, dass im Granulat-Vorratsbehälter (236) mit einer Zwischenwand (245) eine Absaugkammer mit konstant bleibendem Granulatschüttkegel (247) gebildet wird, und dass das untere Ende (244) der Frischgranulat-Förderleitung (234) um eine Strecke in diesen Schüttkegel eintaucht, die annähernd dem Durchmesser der Zufuhrleitung (212) entspricht.

## Claims

1. Method of preparing granules at a work station by means of a preparation apparatus, wherein a variable amount of ambient air is sucked through the preparation apparatus as carrier air for conveying the granules which are to be prepared, characterised in that a variable part of this carrier air is used for separating foreign matter flowing with the granules, the granules to be prepared being conveyed by means of the carrier air as a stream of material in a pipe (108, 208) having a first cross-section and then at the end of said pipe being gradually diverted into a stream of material having a second, wider and thinner cross-section larger than the first and thereupon being diverted, likewise gradually, on an inclined surface (219) into a stream of material having a third, still wider cross-section and passing in a thin, substantially decelerated layer to a restriction (223) whose retained volume is variable, in that the stream of material is then allowed to trickle down in the form of a veil and that said part of the carrier air flows transversely through said veil, in that the near-mesh particle size of the granules which is to be separated is varied by varying the thickness of the veil and the amount of said part of the carrier air, in that further granules are fed by increasing the amount of carrier air when the granules fall below a variable minimum, and in that the entire conveying operation is carried out under reduced pressure.

2. Method according to Patent Claim 1, characterised in that the first cross-section (108, 208) is circular and the second cross-section (218) has horizontally a diameter from four to six times and, transversely thereto, from one half to one third that of the first cross-section, and the width of the third cross-section (219) is from seven to nine times the diameter of the first cross-section.

3. Method according to Patent Claim 1, characterised in that the refilling of fresh granules into a granule storage vessel (236) and the feeding thereof to the work station (114, 214) are effected without interruption of the separation operation.

4. Method according to Patent Claim 1, characterised in that the granules not sucked off from the work station are fed for the purpose of preparation into a granule storage vessel (115).

5. Method according to Patent Claim 1, characterised in that the ambient air sucked in is first used for removing dust from a work chamber (105), through which granules flow, before a variable part of it is used as carrier air.

6. Apparatus for applying the method according to Patent Claim 1, which has a suction device (101, 201) disposed at the end of a suction system, for ambient air for use as carrier air for conveying the granules, characterised by an apparatus for separating foreign matter from the granules by means of a part of said carrier air, by a pipe (108, 208) having a first cross-section for a stream of material consisting of unprepared granules and carrier air, said pipe merging at its end into a curved pipe portion (218) having a second cross-section which is more oblong and larger than the first cross-section, having a distributor chute (219) in the form of an inclined surface, having a restriction (223) for the stream of material leaving the distributor chute, having means (220, 226, 227) for passing said part of the carrier air under the restriction (223) transversely to the stream of material trickling down, having means (103, 203) for varying the thickness of the veil of the stream of material and the amount of the part of the carrier air flowing through the veil, and having means (236, 238 to 246) for replacing with fresh granules the granules consumed and separated at the work station, without interrupting the preparation process.

7. Apparatus according to Patent Claim 6, having a chamber (105) which surrounds a device working with the aid of the granules and into which ambient air is sucked, characterised by an adjustable device (106) for using a part of this ambient air as carrier air for transporting the granules out of the chamber.

8. Apparatus according to Patent Claim 6, characterised in that a pressure equalising pipe (254) leading to an intermediate container (211) is provided in order to eliminate in the bottom part of a feed pipe (212) the reduced pressure impeding discharge.

9. Apparatus according to Patent Claim 6, characterised in that in the granule storage vessel (236) a suction chamber having a constant granule pouring cone (247) is formed by a partition (245), and in that the bottom end (244) of the fresh granule conveyor pipe (234) penetrates into said pouring cone to a depth corresponding approximately to the diameter of the feed pipe (212).

## Revendications

1. Procédé pour traiter des granulés en un lieu de travail au moyen d'un dispositif de traitement, une quantité variable d'air ambiant étant aspirée comme air porteur afin de transporter les granulés à traiter à travers le dispositif de traitement, **caractérisé** en ce qu'on utilise une partie variable de cet air porteur pour séparer les particules étrangères qui s'écoulent avec les granulés, les granulés à traiter étant, en tant que flux de produit, transportés au moyen de l'air porteur dans une conduite (108, 208) présentant une première section, puis étant, à l'extrémité de cette conduite, graduellement déviés en un flux de produit présentant une deuxième section, plus large et plus mince ainsi que plus grande que la première, et étant enfin également graduellement déviés, sur une surface inclinée (219), en un flux de produit présentant une troisième section encore plus large, pour atteindre en une couche mince, sensiblement ralentie, un lieu d'accumulation (223) dont le volume d'accumulation est variable, **en ce qu'**on laisse ensuite le flux de produit s'écouler vers le bas sous la forme d'un film fluide, et on fait passer la partie précitée de l'air porteur transversalement à travers ce film fluide, **en ce** **qu**'on fait varier la grosseur de grain limite des granulés à séparer, en modifiant l'épaisseur du film fluide et le débit de la partie précitée de l'air porteur, et **en ce qu**'en augmentant le débit d'air porteur, on apporte des granulés supplémentaires si la quantité de granulés tombe en dessous d'un minimum variable, **et en ce que** la totalité du transport s'effectue sous dépression.

2. Procédé selon la revendication 1, **caractérisé** en ce que la première section (108, 208) est ronde, la deuxième section (218) est horizontalement égale à 4 à 6 fois le diamètre de la première section et, transversalement à la direction horizontale, à 1/2 à 1/3 de ce diamètre, et la largeur de la troisième section (219) est égale à 7 à 9 fois le diamètre de la première section.

3. Procédé selon la revendication 1, **caractérisé** en ce que le remplissage de nouveaux granulés est effectué dans un récipient de stockage de granulés (236), et son apport au lieu de travail (114, 214) s'effectue sans interrompre le processus le processus de séparation.

4. Procédé selon la revendication 1, **caractérisé** en ce que les granulés non aspirés au lieu de travail sont guidés, afin d'être traités, dans un récipient de stockage de granulés (115).

5. Procédé selon la revendication 1, **caractérisé** en ce qu'on utilise d'abord l'air ambiant aspiré pour dépoussiérer une chambre de travail (105) traversée par le flux de granulés, avant d'utiliser une partie variable de cet air ambiant comme air porteur.

6. Dispositif pour la mise en oeuvre du procédé selon la revendication 1, avec un dispositif d'aspiration (101, 201) disposé à l'extrémité d'un système d'aspiration et destiné à aspirer de l'air ambiant comme air porteur pour transporter les granulés, **caractérisé par** un dispositif pour, à l'aide d'une partie de cet air porteur, séparer des particules étrangères des granulés, **par** une conduite (108, 208) qui présente une première section, est destinée à un flux de produit constitué de granulés non traités et d'air porteur et se raccorde à une partie de conduite courbe (218) présentant une deuxième section qui est plus longue et plus grande que la première section, avec une goulotte distributrice (219) sous la forme d'une surface inclinée, avec un lieu d'accumulation (223) pour le flux de produit quittant la goulotte distributrice (219), avec des moyens (220, 226, 227) pour diriger la partie précitée de l'air porteur, en dessous du lieu d'accumulation (223), transversalement à travers le flux de produit qui s'écoule vers le bas, avec des moyens (103, 203) pour modifier l'épaisseur du film fluide de flux de produit et le débit de la partie de l'air porteur qui traverse le film fluide, et avec des moyens (236, 238 à 246) pour, sans interrompre le processus de traitement, remplacer par de nouveaux granulés les granulés épuisés et séparés au lieu de travail.

7. Dispositif selon la revendication 6, avec une chambre (105) qui entoure un dispositif travaillant au moyen des granulés et dans lequel est aspiré de l'air ambiant, **caractérisé** par un dispositif réglable (106) pour utiliser une partie de cet air ambiant comme air porteur pour transporter les granulés hors de la chambre.

8. Dispositif selon la revendication 6, **caractérisé** en ce qu'est prévue une conduite d'équilibrage de pression (254) menant à un réservoir intermédiaire (211), afin de supprimer la dépression qui, dans la partie inférieure d'une conduite d'alimentation (212), empêche l'évacuation.

9. Dispositif selon la revendication 6, **caractérisé** en ce qu'une chambre d'aspiration, présentant un cône de déversement de granulés (247) qui reste constant, est formée au moyen d'une paroi intermédiaire (245) dans le récipient de stockage de granulés (236), et en ce que l'extrémité inférieure (244) de la conduite (234) de transport de nouveaux granulés s'enfonce dans ce cône de déversement sur une distance qui correspond approximativement au diamètre de la conduite d'alimentation (212).
